# EUROPEAN PATENT SPECIFICATION

(11) **EP 2 207 011 B1**
(45) Date of publication and mention of the grant of the patent: **09.11.2011**
(21) Application number: 10150441.3
(22) Date of filing: 11.01.2010
(51) Int. Cl.: G01C 17/34, G01C 21/20

(54) **Method for providing digital compass function and portable terminal adapted thereto**
Verfahren zur Bereitstellung einer digitalen Kompassfunktion und darauf eingerichtetes tragbares Endgerät
Procédé pour la fourniture d'une fonction de compas numérique et terminal adapté à ce procédé

(30) Priority: 12.01.2009 KR 20090002191; 24.12.2009 KR 20090131103
(43) Date of publication of application: 14.07.2010
(73) Proprietor: SAMSUNG ELECTRONICS CO., LTD., Suwon-si, Gyeonggi-do (KR)
(72) Inventor: Kim, Woo Tae, Gyeonggi-do (KR); Lim, Tae Gyun, Gyeonggi-do (KR); Jung, Jae Ik, Gyeonggi-do (KR); Kim, Young Hae, Gyeonggi-do (KR); Chae, Suk Woo, Gyeonggi-do (KR); Yea, Hae Shik, Gyeonggi-do (KR)
(74) Representative: Ketelaars, Maarten F.J.M.

(56) References cited:
- US-A- 4 659 231
- US-A1- 2005 288 858

## Description

### BACKGROUND OF THE INVENTION

### 1. Field of the Invention

The present invention relates to a digital compass function provided in a portable terminal that can detect north based on the altitude of a celestial body, such as the sun, the moon, constellations, a particular star, etc., current location information and that can calculate and display the direction of Mecca.

### 2. Description of the Related Art

In recent years, portable terminals have been widely used provide a variety of functions, in addition to a a voice or video call service, such as a file reproducing function like an MP3 player, an image capturing function like a digital camera, etc. They can also support other functions, such as a mobile game, an arcade game, etc.

Portable terminal manufacturers analyze users' features, preferences, interests, etc., to enhance their enjoyment. For example, Muslims pray towards a particular direction, Mecca, at particular times of the day. To address this need, manufacturers have recently developed and released portable terminals having a capability to determine the direction of pray. However, this type of terminal require relatively expensive electronic components to detect the direction of Mecca, such as geomagnetic sensors, GPS, etc., which increases the manufacturing costs. The geomagnetic sensors are very sensitive, thus may not function properly which can lead to incorrect prayer direction. Muslims who cannot purchase such expensive portable terminals are at a disadvantage when holding a religious service.

US patent application US 2005/288858 A1 describes a portable electronic device, like a cellular telephone for example, including software for executing a method for presenting directional indicator information to a user on a display. The device receives geographical information about its location, orientation information of its alignment and geographical information about a landmark of interest. The device then calculates a destination angle relative to the orientation information. The device then presents directional information, for example an arrow, to a user. In one exemplary application, Muslims are able to select Mecca as the landmark of interest. The device then uses information about its own location, the orientation of the device and the location of Mecca to present an arrow on the display indicating the proper direction for the Muslim to align themselves for prayer in accordance with the teachings of Islam.

### SUMMARY OF THE INVENTION

The present invention has been made in view of the above problems, and provides a digital compass function that can easily detect a particular direction, such as the direction of Mecca, based on an altitude of the celestial bodies, such as the sun, the moon, a constellation, a particular star, etc., and current location information of a portable terminal.

The present invention further provides a portable terminal with software that can easily detect a particular direction, such as the direction of Mecca, based on an altitude of the sun and current location information of the portable terminal.

In accordance with an exemplary embodiment of the present invention, a method for providing a digital compass function according to appended claim 1, including: acquiring location information containing latitude and longitude and current time information; calculating north, south, east and west, based on the sun location, using the location information and the current time information; calculating the direction of Mecca based on the location information and the calculated north, south, east and west; and outputting a sun image representing the sun, the cardinal point image representing north, south, east and west, and an image representing the direction of Mecca.

In accordance with another exemplary embodiment of the present invention, a portable terminal that provides a digital compass function according to appended claim 6, including : a display unit for displaying screens according to the use of the portable terminal; and a controller for controlling the display unit to output the direction of Mecca. The controller includes: a location information detector for detecting location information containing latitude and longitude; a timer for providing current time information; a Mecca direction detector; and a screen output unit. The Mecca direction detector calculates north, south, east and west, based on the sun, using the location information and the current time information. It also calculates the direction of Mecca based on the location information and the north, south, east and west. The screen output unit outputs a sun image representing the sun, the cardinal point image representing north, south, east and west, and an image representing the direction of Mecca.

### BRIEF DESCRIPTION OF THE DRAWINGS

The features and advantages of the present invention will become more apparent from the following detailed description in conjunction with the accompanying drawings, in which:
FIG. 1 is a schematic block diagram illustrating a portable terminal according to an embodiment of the present invention;
FIG. 2 is a detailed view illustrating the controller of FIG. 1;
FIG. 3A to FIG. 3C are views illustrating screen interfaces of the portable terminal 100 according to an embodiment of the present invention; and
FIG. 4 is a flow chart that describes a method for providing a digital compass function according to an embodiment of the present invention.

### DETAILED DESCRIPTION OF THE INVENTION

Hereinafter, exemplary embodiments of the present invention are described in detail with reference to the accompanying drawings. The same reference numbers are used throughout the drawings to refer to the same or similar parts. For the purposes of clarity and simplicity, detailed descriptions of well-known functions and structures incorporated herein may be omitted to avoid obscuring the subject matter of the present invention.

Prior to explaining the embodiments of the present invention, terminologies will be defined for the present description below. The terms or words described in the present description and the claims should not be limited by a general or lexical meaning, instead should be analyzed as a meaning and a concept through which the inventor defines and describes the present invention at his most effort, to comply with the idea of the present invention. Therefore, one skilled in the art will understand that the embodiments disclosed in the description and configurations illustrated in the drawings are only preferred embodiments, instead there may be various modifications, alterations, and equivalents thereof to replace the embodiments at the time of filing this application.

In an embodiment of the present invention, the portable terminal can detect a particular direction, for example, the direction of Mecca toward which Muslims pray. In general, Muslims following Islam perform a prayer, called 'Salat', five times a day. The dawn prayer 'Fajar' is performed when the morning light appears as the sun rises. The mid-day prayer 'Zhuhr' is performed when the sun appears the highest in the sky. The afternoon-prayer 'Asr' is performed two hours before sunset. The after-sunset prayer `Magrib' is performed when the sun is fully set. The night prayer 'Isha' is performed two hours after sunset. In addition to formal prayer five times a day, Muslims may further perform Friday noon prayer, additional duty prayer, an arbitrary prayer, etc. Prayer is performed in such a way that Muslims face in the direction of Mecca and bow thereto. To this end, Muslims always need to know the direction of Mecca at their locations. Prayer is performed based on before-sunrise, sunrise, before-sunset, and sunset, etc. Prayer time may be altered according to a local area where the location of at least one of the celestial body, such as the sun, the moon, the constellation, a particular star, etc., is changed.

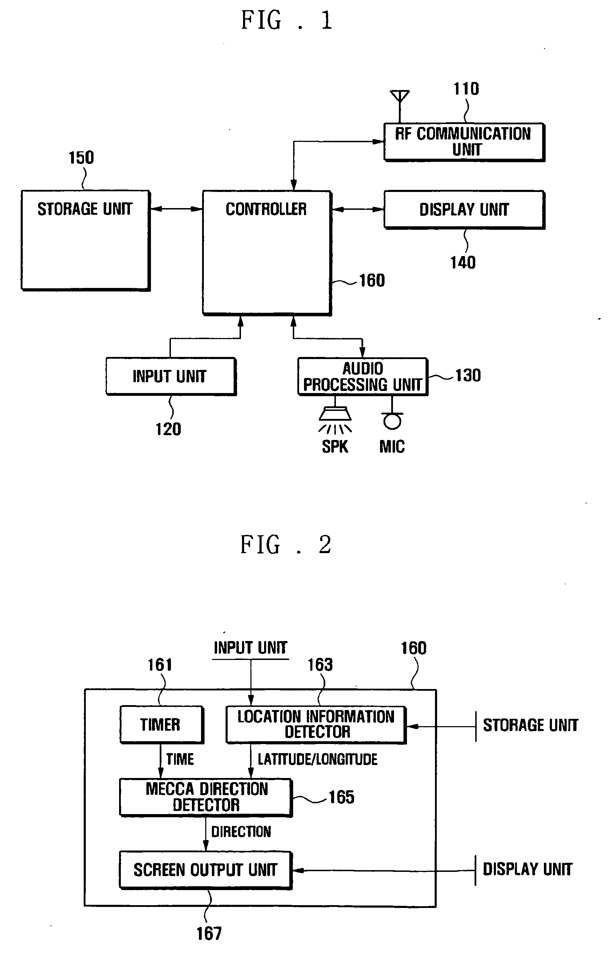

FIG. 1 is a schematic block diagram illustrating a portable terminal according to an embodiment of the present invention.

Referring to FIG. 1 , the portable terminal 100 includes an RF communication unit 110, an input unit 120, an audio processing unit 130, a display unit 140, a storage unit 150, and a controller 160.

Briefly, the portable terminal 100 includes information regarding locations in the format of a table, for example, the latitude and longitude associated with cities. When a signal is input to the input unit 120 and selects a city, the portable terminal 100 extracts the latitude and longitude corresponding to the selected city, calculates information regarding the location of the celestial bodies, such as the sun, the moon, a constellation, a particular star, etc., and the north direction considering current time, and then identifies a particular direction, for example, the direction of Mecca. Thereafter, the portable terminal 100 controls the display unit 140 to display the calculated information regarding the location of the celestial bodies, such as the sun, the moon, a constellation, a particular star, etc." the calculated north direction and the calculated direction of Mecca, so that the portable terminal user can detect the desired, such as direction of Mecca.

In operation, the RF communication unit 110 establishes communication channels for a voice call, video, and data transmission, under the control of the controller 160. It includes an RF transmitter for up-converting the frequency of transmitted signals and amplifying the transmitted signals, and an RF receiver for low-noise amplifying received RF signals and down-converting the frequency of the received RF signals.

The RF communication unit 110 receives information regarding current time from a base station and outputs it to the controller 160. In an embodiment of the present invention, current time is the time when a user desires a particular direction, such as a prayer time. If the downloaded current time, as a default function of the RF communication unit 110, is set in the portable terminal 100, the portable terminal 100 can download the prayer times a particular religion when the RF communication unit 110 establishes a communication channel with the server. The RF communication unit 110 can establish a communication channel with a server according to a user's request and receive information regarding the latitude and longitude of a location where the user is.

The input unit 120 receives numerical or character information. It includes a plurality of keys and function keys to set a variety of functions. The function keys may be composed of directional keys, side keys, and shortcut keys, which serve to perform particular functions. The input unit 120 generates keys signals related to a user's setting 100 and outputs them to the controller 160. In the embodiment of the present invention, the input unit 120 generates signals for selecting a prayer mode and a location, for example, a city name where a portable terminal user is located.

The audio processing unit 130 includes a speaker SPK for reproducing audio data during the call, and a microphone for receiving a user's voice or other audio signals during the call. In the embodiment of the present invention, if the portable terminal 100 is operated in a prayer mode, the audio processing unit 130 outputs an alarm signal at a preset time.

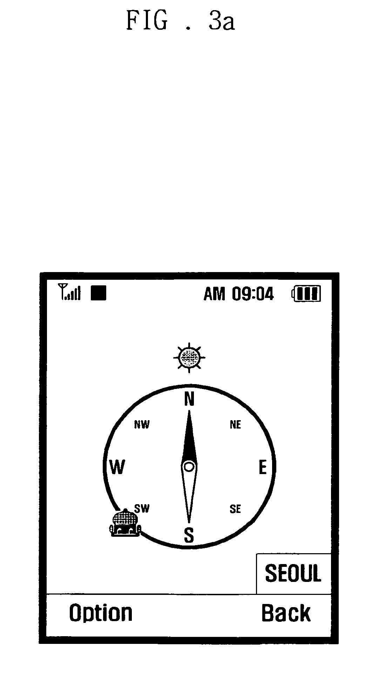

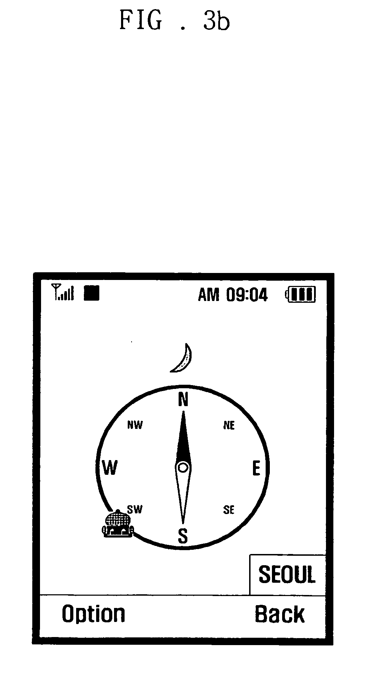

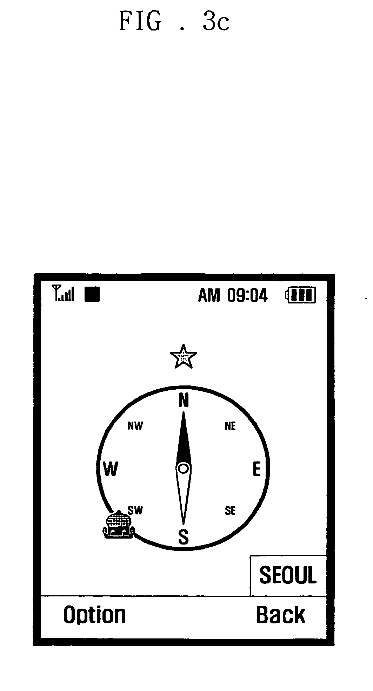

The display unit 140 displays a variety of menus of the portable terminal 100, information input by a user or provided to the user, etc. That is, it provides a variety of screens, for example, an idle screen, a menu screen, a message writing screen, a call mode screen, etc. In the embodiment of the present invention, the display unit 140 can display an icon, indicating whether a prayer mode is set. It can also display a pop-up message indicating a preset prayer time when the prayer time arrives. To this end, it is preferable that the display unit 140 displays a pop-up message a few minutes before the preset prayer time. It can also display a screen interface that provides the direction of Mecca at a preset prayer time, which will be explained later in details with reference to FIG. 3.

When the portable terminal 100 is set in a prayer mode, the display unit 140 may display an input field through which a user can input his/her current location. The display unit 140 may be implemented with a liquid crystal display (LCD). If the display unit 140 is implemented with a touch screen including an LCD, it may also serves as an input device. In that case, the display unit 140 may further include a display panel and touch sensors located thereon. The portable terminal 100 with a touch screen provides a variety of touch-based menu screens on the display unit 140.

The storage unit 150 stores a variety of application programs for the operations of the portable terminal 100, the operation of the prayer mode, the reproduction of stored files, etc. It also stores a key map or menu map for operating a touch screen. The key map and menu map may be implemented with a variety of types. The key map may be a keyboard map, a 3x4 key map, a QWERTY key map, etc. The key map may also be a control key map for controlling an application program that is currently being executed. The menu map may be a map for controlling an application program that is currently being executed as well as other variety of menus. The storage unit 150 is composed of a program area and a data area.

The program area stores an operating system (OS) for booting the portable terminal 100 and operating the entire function of elements included in the portable terminal 100. It also stores a variety of application programs as follows: an application for the reproduction of various types of files, an application for supporting a call function, an application for operating a web-browser to access the Internet, an MP3 application for reproducing various types of sound sources, an image outputting application for reproducing photographs, a moving image reproducing application, etc. In the embodiment of the present invention, the program area can store an application program for operating a prayer mode. The prayer mode operating application checks whether a preset prayer time arrives based on a time provided by the portable terminal 100, and, if the preset prayer time has arrived, outputs alarm signals notifying the user. The prayer mode operating application provides the direction of Mecca to a Muslim believer who wishes to pray. That is, if a user selects the detection of the direction of Mecca on the input unit 120, the prayer mode operation application program outputs an input field to receive a current location, for example, a city name. If a city name is input, the prayer mode operating application program identifies location information containing the latitude and longitude based on the input city name, and then checks current time information from a timer of the portable terminal 100. After that, based on the information regarding the current location of the city and the current time information, the prayer mode application program calculates information regarding the north direction, and the location regarding one of the celestial bodies, which matches the current time, where the celestial body include the sun, the moon, a constellation, a particular star, etc. Next, the prayer mode application program displays the direction of Mecca on the display unit 140 based on the calculated north direction and the calculated location regarding the celestial body. The data area stores data generated when the portable terminal 100 is operated as well as a variety of other contents. If the display unit 140 is implemented with a touch screen, the data area stores user data input through the touch screen. In the embodiment of the present invention, the data area stores location information in the format of a table. The location information table stores the latitude and longitude associated with city names. The location information table can be updated based on information received through the RF communication unit 110. The data area also stores a prayer time table. The prayer time table refers to a table containing information regarding times that Muslim followers must perform prayer.

The controller 160 controls the supply of power and the initialization process with respect to each element in the portable terminal 100. After completing the initialization process, the controller 160 controls the signal flow among the elements to support a prayer mode. The controller 160 updates the location information table. That is, it allows the portable terminal 100 to access a particular server according to a user's request, receives information regarding a location where the portable terminal 100 is located, then updates the location information table based on the received location information.

If the prayer mode is set in the portable terminal 100, the controller 160 can check a current time and then perform an alarm function of notifying a user when a prayer is due according to a particular religious belief. For example, the controller 160 provides an environment setting menu for supporting a prayer mode. The prayer mode environment setting menu contains items corresponding to the five formal prayers, i.e., dawn prayer 'Fajar', mid-day prayer 'Zhuhr', afternoon-prayer 'Asr', after-sunset prayer 'Magrib', night prayer 'Isha'. If one of the items is selected, the controller 160 outputs a pop-up window or a sub-menu for selecting prayer starting time, prayer time duration, and an alarm type. The controller 160 may automatically update a prayer time table every day. Since a prayer time is determined based on the path of the sun, i.e., sunrise, sunset, etc., if a portable terminal user is located at a local area where the path of the sun is altered every day, the prayer time is also changed. Therefore, a prayer time table is required. In the embodiment of the present invention, the controller 160 calculates the change of the sun according to a time at a current location and applies the amount of changed time to the prayer time table. For example, the sun rises earlier in summer than in winter and sets later in summer than in winter. This is because the earth rotates with respect to the earth's axis being tilted at 23.5° and revolves around the sun. The larger the latitude the greater the change in the sunrise and sunset times. The time zone is also altered according to the latitude. Therefore, the controller 160 tracts the path of the sun on the earth being tilted at 23.5° and calculates the sunrise and sunset times at a particular local area, based on the latitude and longitude. The controller 160 updates the prayer time table based on the calculated sunrise and sunset times. The prayer time table may contain time information regarding the five formal payers and information regarding a predetermined prayer once a week.

Alternatively, the controller 160 may update the prayer time table based on the location of celestial body, such as constellations, or a particular star, the moon, etc. Similar to the relationship between the earth and the sun, the location of the celestial body including the moon, constellations, and a particular, etc., may also be changed over time because of the rotation and revolution of the earth. Therefore, the controller 160 tracks the movement path of a particular celestial body, such as the moon, a constellation, a particular star, etc., according to the tilted angle of the earth' axis, with respect to the latitude and longitude, and then calculate a time at a particular location on the earth. The change in the location of the celestial body occurs in every celestial body, with respect to the earth. Therefore, a particular time zone can be calculated at a particular position, with respect to the sun, the moon, or a particular star. In the embodiment of the present invention, since the prayer time table for prayer times is established based on the sun, it is preferable to detect the change of sunrise and sunset times. It should be, however, understood that the present invention is not limited to the embodiment. For example, the prayer time table may be established based on moonrise, moonset, the appearance and disappearance of a particular constellation or a particular star.

The controller 160 may support three types of alarm modes when a prayer mode is activated in the portable terminal 100. The first type of alarm mode is a notification mode if a call request service function or a message reception service function is activated during a preset prayer time. The second type of alarm mode is a mode where only an alarm lamp is operated, instead of a sound alarm and a vibration, if a call request service function or a message reception service function is activated at a preset prayer time. The third type of alarm mode is a mode according to the settings of the portable terminal 100, for example, a vibration alarm mode if a vibration alarm is set, and a sound alarm mode if a sound alarm is set.

The controller 160, as shown in FIG. 2, includes a timer 161, a location information detector 163, a Mecca direction detector 165, and a screen output unit 167.

The timer 161 serves to provide current time information based on a time received from a base station. The time received from the base station may be a time transmitted from a satellite. That is, when a satellite transmits a time to the portable terminal 100 via a base station, the controller 160 of the portable terminal 100 sets the timer 161 based on the received time and provides current time information.

The location information detector 163 serves to calculate a current location of the portable terminal 100. When a user inputs a city name in an input field displayed on the display unit 140 during a prayer mode, the location information detector 163 detects location information containing latitude and longitude using the user's input city name from the location information table stored in the data area of the storage unit 150. The location information detector 163 may also display an input field window for selecting city names on the display unit 140. That is, the input field window displays an item for showing continent names, an item for showing country names according to a selected content name, and an item for showing city names in a selected country name. Alternatively, the location information detector 163 may acquire current location information using a mobile country code (MCC) and a mobile network code (MNC) from among information received from a base station.

The Mecca direction detector 165 can calculate location information regarding the sun, information regarding north, south, east and west, and the direction of Mecca, based on the current time information and the current location information where the user is located. That is, Mecca direction detector 165 calculates the movement path of the sun at corresponding location information based on location information detected by the location information detector 163, and detects location information regarding the sun using the current time information according to the movement path of the sun. The Mecca direction detector 165 detects the location information regarding the sun and determines north, south, east and west with respect to the sun. For example, if Seoul, the capital city of Republic of Korea, is input to the input field displayed on the display unit 140, the Mecca direction detector 165 detects the latitude and longitude of Seoul, referring to the location information table, and then tracks the movement path of the sun. Note that the movement path of the sun is generated as the earth's axis is tilted, and moves little by little every time and every month. However, the movement path of the sun moves within a range that is fixed on the earth and will not be altered as long as the earth's axis is unchanged. Therefore, the Mecca direction detector 165 can identify where the location of the sun is located at the current time, from the movement path of the sun. That is, when north, south, east and west where the sun is located is determined, the Mecca direction detector 165 can detect the direction of Mecca at the location where the user is currently located. Since Mecca is the name regarding a place fixed on the earth point and cannot be moved, if north, south, east and west are determined, the direction of Mecca is always retained at a corresponding local area.

Based on the current time information and the current location information, the Mecca direction detector 165 calculates information regarding north, south, east and west directions, the direction of Mecca, and at least one of the pieces of information regarding the locations of the moon, a particular constellation, and a particular star. That is, based on location information detected by the location information detector 163, the Mecca direction detector 165 calculates the movement path of a particular celestial body, such as, the moon, a particular constellation, a particular star, etc., at a corresponding location, and detects location information of the celestial body using the current time information, from the movement path of the celestial body. If the location information of a particular celestial body is detected, the Mecca direction detector 165 can determine north, south, east and west directions with respect to the particular celestial body.

In order to detect the direction of Mecca at a location where a user is currently located, it needs three pieces of information, i.e., location information regarding the North Pole, information regarding a user's current location, and information regarding the direction of Mecca. Since the North Pole and Mecca are fixed on the earth, their information may serve as a constant. The user's current location information may be acquired from a user's input city name or information collected through a network. When the points corresponding to the three pieces of information are connected, a diagram is generated on the earth. Since the earth is spherical, an azimuth angle can be calculated from the user's current location to Mecca, based on the spherical trigonometric formulae. Although the diagram formed on the earth is curved, it may be approximated to a Euclidean diagram.

The portable terminal 100 cannot detect north at its current location without a reference value, i.e., a user's input. It may be set to detect north based on the information regarding the celestial body, for example, the sun. To this end, the portable terminal 100 uses a solar position (SOLPOS) algorithm. The SOLPOS algorithm refers to an algorithm that serves to detect the location of the sun at a particular local area on the earth at a particular time. That is, the SOLPOS algorithm can track the location of the sun on the earth based on the rotation and revolution of the earth and the tilt angle of the earth's axis. After the portable terminal 100 detects the location of the sun, it can detect the altitude of the sun based on the detection thereof, and also azimuth angle of the sun using the detected altitude of the sun. North can be calculated by subtracting 360° from the azimuth angle of the sun. After the direction of Mecca is calculated using the spherical trigonometric formulae, the actual direction of Mecca can be acquired by adding north to the direction of Mecca.

The portable terminal 100 can set the north direction based on the location of the moon, a constellation, or a particular star. To this end, the portable terminal 100 employs a location tracking algorithm of the moon, a particular constellation, or a particular star. The location tracking algorithm can detect the location of a corresponding celestial body at a particular position on the earth and on a particular time. That is, the location tracking algorithm can track the location of a celestial body on the earth based on the rotation and revolution of the earth and the earth's axis. After detecting the location of the celestial body, the portable terminal 100 can detect the altitude of the celestial body based on the detected location of the celestial body, and can compute an azimuth angle of the celestial body using the detected altitude of the celestial body. When the azimuth angle of the celestial body has been acquired, the north direction can be calculated by subtracting the azimuth angle from 360°. After the direction of Mecca is computed through the spherical trigonometric formulae, the actual direction of Mecca can be acquired by adding the north direction and the direction of Mecca.

As described above, the portable terminal user calculates information regarding north, based on his/her current location, time information, and the direction of the celestial body, such as the sun, the moon, the constellations, a particular star, etc. After that, the user calculates the direction of Mecca using the calculated north information, so that he/she can face in the direction of Mecca and perform prayer.

The screen output unit 167 serves to display information regarding north, south, east and west, detected by the Mecca direction detector 165, with respect to the celestial body, such as the sun, the moon, the constellations, a particular star, etc., and information regarding the direction of Mecca. The screen output unit 167 displays an icon corresponding to the celestial body, such as the sun, the moon, the constellations, a particular star, etc., images for north, south, east and west, and an icon for the direction of Mecca. Practically, the icon corresponding to the celestial body, such as the sun, the moon, the constellations, a particular star, etc., appears fixedly on a particular position. When the portable terminal user matches the direction of an icon corresponding to the celestial body, such as the sun, the moon, the constellations, a particular star, etc., displayed on the screen, with the actual direction of the celestial body, such as the sun, the moon, the constellations, a particular star, etc., the direction of Mecca and north, south, east and west correspond the images displayed on the screen.

FIG. 3A to FIG. 3C are views illustrating screen interfaces of the portable terminal 100, according to an embodiment of the present invention.

As shown in FIG. 3A, the display unit 140 displays an icon that indicates the received signal strength indicator (RSSI) value on an indicator area, and a battery icon that indicates the amount of remaining battery energy. In the embodiment of the present invention, the display unit 140 shows a particular icon in a certain area, indicating whether a prayer mode is set, for example, 'G.' It should be understood that the icon of the prayer mode can be designed in the various other shapes.

The display unit 140 may also display an icon corresponding to the sun on the upper center, and a digital compass icon with north, south, east and west on the center screen, with respect to the sun icon. The digital compass icon has N, S, E, and W representing north, south, east and west, respectively, on cardinal points, and an icon indicating the direction of Mecca on a corresponding point. The display unit 140 may also display a city name of a current local area, input by a user, at a preset position, for example, bottom right.

When the user holds the portable terminal 100 displaying these icons and images and then matches the direction of the sun icon with the actual direction of the sun, it displays the direction of Mecca.

As shown in FIGS. 3B and 3C, the portable terminal 100 can provide screen interfaces through which the direction of Mecca can be detected, based on the moon, a particular constellation, or a particular star, according to the current time. To this end, the portable terminal 100 can display menu items so that a user can select user interfaces to which the sun, the moon, and the constellations are applied.

In the embodiment of the present invention, the portable terminal 100 can detect the direction of Mecca based on the current time information and a particular celestial body. That is, the portable terminal 100 can detect the direction of Mecca based on the sun while the sun is appearing in the sky or based on the location of the moon, a particular constellation, or a particular star in the night.

As described above, the portable terminal according to the present invention provides a digital compass function that can calculate north, south, east and west at a local area where the user is currently located with respect to the movement path of the celestial body, such as the sun, the moron, the constellation, and a particular star that is caused by the earth's axis being tilted. Therefore, the portable terminal user can detect the direction of Mecca when he/she matches the direction of the celestial body, such as the sun, the moon, the constellation, and a particular star icon displayed on the display unit 140 with the actual direction of the celestial body.

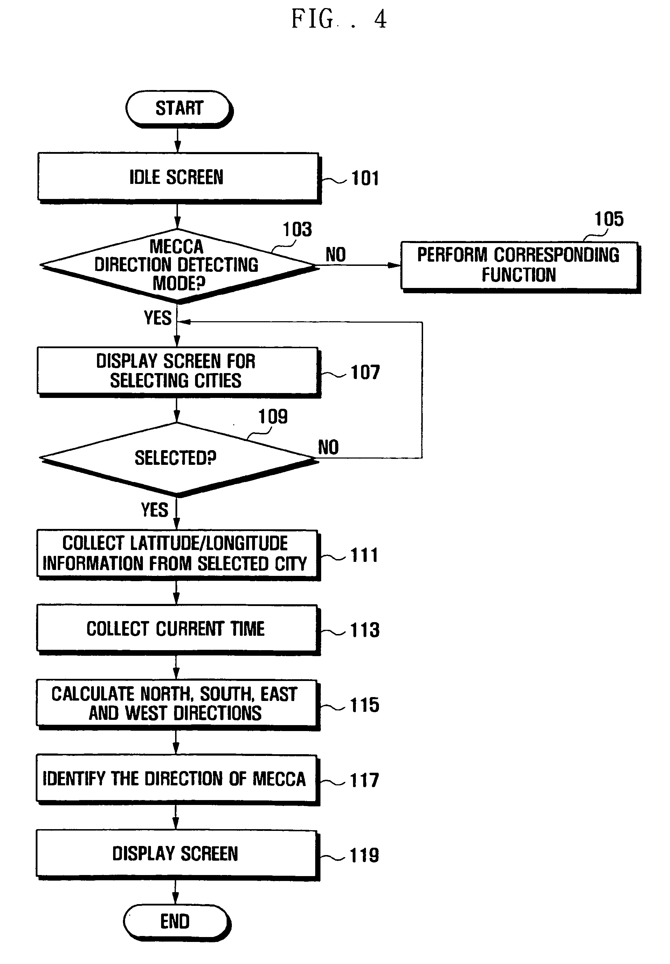

In the foregoing description, the configuration of the portable terminal supporting a digital compass function has been explained. In the following description, a method for providing a digital compass function, according to an embodiment of the present invention, is explained in detail with reference to FIG. 4.

FIG. 4 is a flow chart that describes a method for providing a digital compass function, according to an embodiment of the present invention.

Referring to FIG. 4, when the portable terminal is turned on, the controller performs a booting process and initializes elements in the portable terminal. After that, the controller displays an idle screen on the display unit (101).

The controller determines whether a Mecca direction detecting mode is activated (103). To this end, the user may request the detection of the direction of Mecca by select a menu for detecting the direction of Mecca on the input unit or activating a shortcut key preset to a Mecca direction detecting mode. If the controller ascertains that a Mecca direction detecting mode is not activated at 103, it performs a corresponding function (105).

On the contrary, if the controller ascertains that a Mecca direction detecting mode is activated at 103, it displays a city name selecting screen (107). That is, the controller display a list or a pop-up window containing items for selecting one of the city names where the user is currently located. The controller may provide a rapid city name search function. That is, instead of outputting the list of city names, the controller may display an input field, so that the user can directly input city name in alphabets thereto.

Alternatively, the controller may detect location information containing the latitude and longitude without using the screen for selecting city names and the input field for receiving a city name. That is, as described above, the controller can calculate information regarding a location where the portable terminal is currently located based on the mobile country code (MCC) and the mobile network code (MNC), where the MCC and MNC are transmitted from a base station and contain the current information of the portable terminal. In that case, the controller does not display a city name selecting screen at 107, but automatically collects location information if a Mecca direction detecting mode is activated.

After displaying the city name selecting screen at 107, the controller determines whether a particular city name is selected (109). If the controller ascertains that a particular city name has been selected at 109, it acquires location information containing the latitude and longitude of the selected city name (111). That is, the controller detects latitude and longitude information regarding the selected city name, referring to the location information table stored in the storage unit. On the contrary, if the controller does not receive a signal for selecting a city name at 109, it returns to step 107 and displays a city selecting screen.

After acquiring the latitude and longitude information of the selected city name at 1 1 1 , the controller acquires current time information (113). That is, the controller detects current time information by monitoring the timer. In an alternate embodiment, it should be understood that acquiring current time information at 113 may be performed immediately before a city name selecting screen is output.

After collecting the location information and current time information, the controller calculates north, south, east and west with respect to a certain point on the display unit, for example, the celestial body icon displayed on the upper center of the display unit (115). The controller detects the direction of Mecca with respect to the north, south, east and west and the current position information (117).

After that, the controller displays the celestial body icon, the cardinal points of north, south, east and west, and the direction of Mecca on the screen (119). The portable terminal user matches the direction of the celestial body icon, displayed on the display unit, with the actual direction of celestial body, thereby enabling the user to detect the direction of Mecca.

In the embodiment of the present invention, although the Mecca direction detecting mode is performed according to a signal input through the input unit at 103, it should be understood that the present invention is not limited to the embodiment. For example, the controller may perform the Mecca direction detecting process based on the prayer time table. The prayer time table stores prayer times when Muslim believers perform prayer. That is, the prayer time table serves to provide the users with five formal prayer times a day that are determined with respect to the appearance and disappearance of a particular celestial body, for example, sunrise, noon, sunset, etc, of the sun. If a corresponding prayer time arrives, the controller refers to the prayer time table and inform the user of a prayer start, a prayer duration time, etc., via the audio processing unit, the display unit, and a vibration mode. To this end, the controller monitors the timer whether a prayer time defined in the prayer time table arrives, and, if the prayer time has arrived, performs an alarm function and also automatically operates the Mecca direction detecting mode. When the Mecca direction detecting mode has been performed, the controller displays a city name selecting screen at step 107 or automatically detect corresponding location information transmitted from a base station. In a state where the portable terminal is set so that it can automatically collect location information, if an alarm function reporting a prayer time is activated, the controller may automatically display an image containing the celestial body icon, the four cardinal points, and the direction of Mecca at step 119.

The controller detects sunrise and sunset times at a corresponding local area using time information output from the timer, and automatically updates the prayer time table based on the detected appearance and disappearance times of a celestial body, for example, sunrise and sunset times of the sun.

Although the embodiment of the present invention has been explained with respect to the sun, as an example of the celestial body, it should be understood that the present invention is not limited to the embodiment. For example, the function for providing a digital compass function, according to the present invention, can detect the direction of Mecca using the moon, the constellation, or a particular star instead of the sun.

As described above, the method for providing a digital compass function, according to the present invention, can calculate the direction of Mecca with respect to the direction of a celestial body at a particular location area, without using information output from a geo magnetic sensor. Therefore, the portable terminal user can ascertains and store the direction of Mecca while a celestial body is in the sky, so that he/she can face in the correct, stored direction of Mecca and perform a prayer.

As described above, the digital compass function providing method and the portable terminal adapted thereto, according to the present invention, can detect a particular direction from a location where at least one of the celestial bodies, such as the sun, the moon, a constellation, a particular star, etc. can be observed.

Although exemplary embodiments of the present invention have been described in detail hereinabove, it should be understood that many variations and modifications of the basic inventive concept herein described, which may be apparent to those skilled in the art, will still fall within the scope of the exemplary embodiments of the present invention as defined in the appended claims.

## Claims

1. A method for providing digital compass functions, comprising:
acquiring location information containing latitude and longitude and current time information;
calculating directions of north, south, east and west with respect to a celestial body, using the location information and the current time information;
calculating the direction of Mecca with respect to the location information and the directions of north, south, east and west; and
outputting a celestial image representing celestial body, the cardinal point image representing north, south, east and west, and an image representing the direction of Mecca.

2. The method of claim 1, further comprising:
matching the direction of celestial body image with the actual direction of celestial body.

3. The method of claim 1, wherein the celestial body comprises at least one of the sun, the moon, the constellation, and a particular star.

4. The method of claim 3, further comprising:
storing prayer times;
detecting at least one of a change in the sunrise and sunset times of sun, a change in time according to the movement of the moon, and a change in time according to the movement of the constellation or the star, based on the location information and current time information; and
applying the changes to the stored prayer times and updating prayer times.

5. The method of claim 1, wherein acquiring location information and current time information comprises at least one of the following steps:
storing a location information table containing latitude and longitude by cities, and collecting locating information containing latitude and longitude of a city selected via an input unit; and
acquiring location information based on a mobile country code (MCC) and a mobile network code (MNC) transmitted from a base station.

6. A portable terminal that provides a digital compass function, comprising:
a display unit for displaying screens according to the use of the portable terminal; and
a controller for controlling the display unit to output the direction of Mecca,
wherein the controller comprises:
a location information detector for detecting location information containing latitude and longitude;
a timer for providing current time information;
a Mecca direction detector for calculating directions of north, south, east and west with respect to a celestial body, using the location information and the current time information, and calculating the direction of Mecca with respect to the location information and the directions of north, south, east and west; and
a screen output unit for outputting a celestial image representing the celestial body, the cardinal point image representing north, south, east and west, and an image representing the direction of Mecca.

7. The portable terminal of claim 6, further comprising:
a storage unit for storing prayer times in the format of a table.

8. The portable terminal of claim 7, wherein the controller detects at least one of a change in the sunrise and sunset times of the sun, included in the celestial body, and a change in time according to the movement of the moon, and a change in time according to the movement of the constellation or the star, based on the location information and the current time information, and applies the changed times to the stored prayer times to update the prayer time table.

9. The portable terminal of claim 6, wherein the display unit displays a screen for selecting at least one city name.

10. The portable terminal of claim 9, further comprising:
a storage unit for storing a location information table containing latitude and longitude information by cities,
wherein the location information detector acquires location information regarding a selected city, referring to the location information table.

11. The portable terminal of claim 6, wherein the controller acquires location information based on a mobile country code (MCC) and a mobile network code (MNC) transmitted from a base station.

## Patentansprüche

1. Verfahren zum Bereitstellen digitaler Kompassfunktionen, umfassend:
Beschaffen von Lageinformationen, die den Breitengrad und den Längengrad enthalten, und von Echtzeitinformationen;
Berechnen der Nord-, Süd-, Ost- und Westrichtung mit Bezug auf einen Himmelskörper, wobei die Lageinformationen und die Echtzeitinformationen genutzt werden; und
Berechnen der Richtung nach Mekka mit Bezug auf die Lageinformationen und die Nord-, Süd-, Ost- und Westrichtung; und
Ausgeben eines Himmelsabbildes, das den Himmelskörper darstellt, des Bildes der Haupthimmelsrichtungen, das Norden, Süden, Osten und Westen darstellt, und eines Bildes, das die Richtung nach Mekka darstellt.

2. Verfahren nach Anspruch 1, ferner umfassend:
Abgleichen der Richtung des Bildes des Himmelskörpers mit der tatsächlichen Richtung des Himmelskörpers.

3. Verfahren nach Anspruch 1, wobei der Himmelskörper mindestens ein Objekt aus Sonne, Mond, dem Sternbild und einem bestimmten Stern umfasst.

4. Verfahren nach Anspruch 3, ferner umfassend:
Speichern der Gebetszeiten;
Erfassen von mindestens einer der Änderungen aus einer Änderung in den Aufgangs- und Untergangszeiten der Sonne, einer zeitlichen Änderung gemäß der Bewegung des Mondes und einer zeitlichen Änderung gemäß der Bewegung des Sternbildes oder des Sterns auf der Grundlage der Lageinformationen sowie der Echtzeitinformationen; und
Anwenden der Änderungen auf die gespeicherten Gebetszeiten sowie Aktualisieren der Gebetszeiten.

5. Verfahren nach Anspruch 1, wobei das Beschaffen von Lageinformationen und der Echtzeitinformationen mindestens einen der folgenden Schritte umfasst:
Speichern einer Lageinformationstabelle, die den Breitengrad und den Längengrad von Städten enthält, und Entnehmen von Lageinformationen, die den Breitengrad und den Längengrad einer Stadt enthalten, die über eine Eingabeeinheit ausgewählt wird; und
Beschaffen von Lageinformationen auf der Grundlage eines Mobilen Ländercodes (MCC) und eines Mobilen Netzwerkcodes (MNC), die von einer Basisstation übermittelt werden.

6. Tragbares Endgerät, das eine digitale Kompassfunktion bereitstellt, umfassend:
eine Anzeigeeinheit für die Anzeige von Bildflächen gemäß der Verwendung des tragbaren Endgerätes; und
ein Steuergerät zum Steuern der Anzeigeeinheit, um die Richtung nach Mekka auszugeben,
wobei das Steuergerät umfasst:
ein Lageinformationserfassungsgerät zum Erfassen von Lageinformationen, die den Breitengrad und den Längengrad enthalten,
einen Zeitgeber zum Bereitstellen der Echtzeitinformationen;
ein Erfassungsgerät der Richtung nach Mekka zum Berechnen der Nord-, Süd-, Ost- und Westrichtung mit Bezug auf einen Himmelskörper unter Verwendung der Lageinformationen sowie der Echtzeitinformationen und zum Berechnen der Richtung nach Mekka mit Bezug auf die Lageinformationen und die Nord-, Süd-, Ost- und Westrichtung; und
eine Bildschirmausgabeeinheit zum Ausgeben eines Himmelsabbildes, das die Lage des Himmelskörpers darstellt, eines Bildes der Haupthimmelsrichtungen, das Norden, Süden, Osten und Westen darstellt, und eines Bildes, das die Richtung nach Mekka darstellt.

7. Tragbares Endgerät nach Anspruch 6, ferner umfassend:
eine Speichereinheit zum Speichern der Gebetszeiten im Format einer Tabelle.

8. Tragbares Endgerät nach Anspruch 7, wobei das Steuergerät mindestens eine der Änderungen aus einer Änderung in den Aufgangs- und Untergangszeiten der Sonne, die in den Himmelskörper mit einbezogen ist, und einer zeitlichen Änderung gemäß der Bewegung des Mondes und einer zeitlichen Änderung gemäß der Bewegung des Sternbildes oder des Sterns auf der Grundlage der Lageinformationen sowie der Echtzeitinformationen erfasst und die geänderten Zeiten auf die gespeicherten Gebetszeiten anwendet sowie die Tabelle der Gebetszeiten aktualisiert.

9. Tragbares Endgerät nach Anspruch 6, wobei die Anzeigeeinheit eine Bildfläche für das Auswählen mindestens eines Städtenamens anzeigt.

10. Tragbares Endgerät nach Anspruch 9, umfassend:
eine Speichereinheit zum Speichern einer Lageinformationstabelle, welche die Breitengrad- und Längengradinformationen von Städten enthält,
wobei das Lageinformationserfassungsgerät sich die Lageinformationen, die eine ausgewählte Stadt betreffen, beschafft, indem es auf die Lageinformationstabelle zugreift.

11. Tragbares Endgerät nach Anspruch 6, wobei das Steuergerät die Lageinformationen auf der Grundlage eines Mobilen Ländercodes (MCC) und eines Mobilen Netzwerkcodes (MNC), die von einer Basisstation übermittelt werden, beschafft.

## Revendications

1. Procédé pour fournir des fonctions de boussole numérique, comprenant :
l'acquisition d'informations d'emplacement contenant des informations de latitude et de longitude et des informations d'heure actuelle ;
le calcul des directions nord, sud, est et ouest par rapport à un corps céleste, en utilisant les informations d'emplacement et les informations d'heure actuelle ;
le calcul de la direction de la Mecque par rapport aux informations d'emplacement et aux directions nord, sud, est et ouest ; et
la sortie d'une image céleste représentant le corps céleste, l'image des points cardinaux représentant le nord, le sud, l'est et l'ouest, et une image représentant la direction de la Mecque.

2. Procédé selon la revendication 1, comprenant en outré :
la mise en correspondance de la direction de l'image de corps céleste avec la direction réelle du corps céleste.

3. Procédé selon la revendication 1, dans lequel le corps céleste comprend au moins l'un du soleil, la lune, la constellation et une étoile particulière.

4. Procédé selon la revendication 3, comprenant en outré :
le stockage d'heures de prière ;
la détection d'au moins l'un d'un changement des heures de lever et de coucher du soleil, un changement d'heure en fonction du mouvement de la lune, et un changement d'heure en fonction du mouvement de la constellation ou de l'étoile, sur la base des informations d'emplacement et des informations d'heure actuelle ; et
l'application des changements aux heures de prière stockées et la mise à jour des heures de prière.

5. Procédé selon la revendication 1, dans lequel l'acquisition des informations d'emplacement et des informations d'heure actuelle comprend au moins l'une des étapes suivantes :
le stockage d'un tableau d'informations d'emplacement contenant la latitude et la longitude de villes, et la collecte d'informations d'emplacement contenant la latitude et la longitude d'une ville sélectionnée par le biais d'une unité d'entrée ; et
l'acquisition d'informations d'emplacement sur la base d'un code de pays mobile (MCC) et d'un code de réseau mobile (MNC) transmis d'une station de base.

6. Terminal portable fournissant une fonction de boussole numérique, comprenant :
une unité d'affichage pour afficher des écrans en fonction de l'utilisation du terminal portable ; et
un contrôleur pour commander à l'unité d'affichage de délivrer la direction de la Mecque,
dans lequel le contrôleur comprend :
un détecteur d'informations d'emplacement pour détecter des informations d'emplacement contenant la latitude et la longitude ;
une minuterie pour fournir des informations d'heure actuelle ;
un détecteur de direction de la Mecque pour calculer des directions de nord, sud, est et ouest par rapport à un emplacement d'un corps céleste, en utilisant les informations d'emplacement et les informations d'heure actuelle, et calculer la direction de la Mecque par rapport aux informations d'emplacement et aux directions nord, sud, est et ouest ; et
une unité de sortie d'écran pour délivrer une image céleste représentant le corps céleste, l'image des points cardinaux représentant le nord, le sud, l'est et l'ouest, et une image représentant la direction de la Mecque.

7. Terminal portable selon la revendication 6, comprenant en outré :
une unité de stockage pour stocker des heures de prière dans un format de tableau.

8. Terminal portable selon la revendication 7, dans lequel le contrôleur détecte au moins l'un d'un changement des heures de lever et de coucher du soleil, inclus dans le corps céleste, et un changement d'heure en fonction du mouvement de la lune, et un changement d'heure en fonction du mouvement de la constellation ou de l'étoile, sur la base des informations d'emplacement et des informations d'heure actuelle, et applique les heures changées aux heures de prière stockées pour mettre à jour le tableau des heures de prière.

9. Terminal portable selon la revendication 6, dans lequel l'unité d'affichage affiche un écran pour sélectionner au moins un nom de ville.

10. Terminal portable selon la revendication 9, comprenant en outré :
une unité de stockage pour stocker un tableau d'informations d'emplacement contenant des informations de latitude et de longitude de villes,
dans lequel le détecteur d'informations d'emplacement acquiert des informations d'emplacement en ce qui concerne une ville sélectionnée, en référence au tableau d'informations d'emplacement.

11. Terminal portable selon la revendication 6, dans lequel le contrôleur acquiert des informations d'emplacement sur la base d'un code de pays mobile (MCC) et d'un code de réseau mobile (MNC) transmis d'une station de base.
